# FASCICULE DE BREVET EUROPEEN

(11) **EP 2 500 840 B1**
(45) Date de publication et mention de la délivrance du brevet: **01.07.2015**
(21) Numéro de dépôt: 12159505.2
(22) Date de dépôt: 14.03.2012
(51) Int. Cl.: G06K 7/00, G06K 19/07

(54) **Système de transfert de données et méthode de gestion associée**
Datenübertragungssystem und entsprechende Verwaltungsmethode
Data-transfer system and related management method

(30) Priorité: 15.03.2011 FR 1152124
(43) Date de publication de la demande: 19.09.2012
(73) Titulaire: Commissariat à l'Énergie Atomique et aux Énergies Alternatives, 75015 Paris (FR)
(72) Inventeur: Bacquet, Sylvain, 38470 CHASSELAY (FR); Crochon, Elisabeth, 38320 POISAT (FR); Thomas, Thierry, 38760 VARCES ALLIERES ET RISSET (FR)
(74) Mandataire: Croonenbroek, Thomas Jakob

(56) Documents cités:
- WO-A1-2010/028092
- US-A1- 2003 017 804
- US-A1- 2011 025 462

## Description

La présente invention concerne le domaine des systèmes de transfert de données et plus particulièrement les systèmes de transfert de données distribués comprenant une pluralité d'équipements périphériques destinés à communiquer avec une base centrale par le biais d'une communication radio-fréquence.

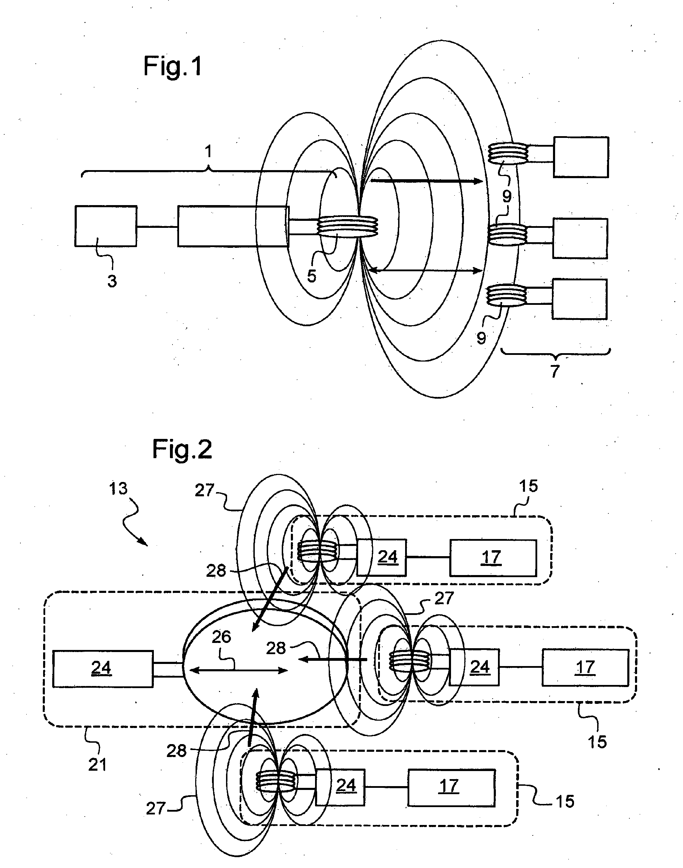

Afin d'effectuer ce transfert des données, une source d'énergie est nécessaire. Dans l'état de la technique, on connaît la technique d'identification par radio-fréquence (« Radio Frequency Identification (RFID) » en anglais) représentée sur la figure 1 dans laquelle la base centrale aussi appelée lecteur 1 comprend une source d'énergie, par exemple une batterie 3, qui permet à la base centrale 1 d'alimenter un émetteur radiofréquence 5. Les signaux radiofréquences sont envoyés vers des équipements périphériques appelés étiquettes (« tags » en anglais) 7 comprenant une antenne 9. Les signaux radiofréquences permettent d'alimenter les étiquettes 7 et de récupérer des données associées aux équipements périphériques 7. Néanmoins, la batterie 3 de la base centrale 1 doit être régulièrement changée ou rechargée par une source d'énergie extérieure ce qui peut être un inconvénient dans certains environnements ou pour certaines applications.

Le but de la présente invention est donc de surmonter les inconvénients précités de l'état de la technique et de proposer une méthode et un système permettant d'optimiser la gestion de l'énergie.

Le document WO 2010/028092 A1 décrit une méthode de gestion d'un système de transfert de données comprenant
- une pluralité d'équipements périphériques,
- une base centrale,

le système de transfert de données comprenant également des moyens de communication radio-fréquence permettant le transfert de données entre les équipements périphériques et la base centrale
dans laquelle,
- on récupère de l'énergie au niveau des équipements périphériques et,
- on transfère une partie au moins de l'énergie récupérée vers la base centrale via les moyens de communication radio-fréquence.

La présente invention concerne une méthode de gestion d'un système de transfert de données selon la revendication 1.

Selon un aspect de la présente invention, les équipements périphériques comprennent des moyens d'identification et dans laquelle les données transférées entre un équipement périphérique et la base centrale comprennent un identifiant dudit équipement périphérique.

Selon un aspect supplémentaire de la présente invention, les équipements périphériques comprennent des moyens de mesure d'au moins une grandeur physique, les données transférées entre un équipement périphérique et la base centrale comprennent au moins une valeur de la, au moins une, grandeur physique mesurée et la base centrale comprend des moyens de traitement des données transférées correspondant à la, au moins une, valeur de la, au moins une, grandeur physique mesurée.

Selon un autre mode de réalisation, le transfert d'énergie des équipements périphériques vers la base centrale est réalisé par un couplage inductif des moyens de communication radio-fréquence.

Selon un mode de réalisation additionnel, la récupération d'énergie comprend la conversion d'une énergie disponible au niveau des équipements périphériques en énergie électrique.

Selon un aspect supplémentaire, le système d'acquisition comprend une base centrale comportant une antenne accordée sur une fréquence prédéterminée et les équipements périphériques comprennent une antenne double boucle présentant une impédance mutuelle nulle, une première boucle assurant l'émission d'un signal radio-fréquence et une deuxième boucle assurant la réception d'un signal radio-fréquence, la synchronisation des signaux émis par la pluralité d'antennes comprenant les étapes suivantes:
- lorsque le processus de communication de l'équipement périphérique à la base centrale est déclenché, une phase d'écoute est réalisée par la boucle de l'antenne configurée pour recevoir un signal radio-fréquence afin de détecter un éventuel signal radio-fréquence émis par la base centrale,
- si un signal radio-fréquence émis par la base centrale est détecté, l'équipement périphérique utilise alors le signal radio-fréquence détecté pour transmettre, à la base centrale, un signal synchrone et en phase avec le signal radio-fréquence détecté,
- si aucun signal radio-fréquence émis par la base centrale n'est détecté, l'équipement périphérique émet alors un signal radio-fréquence à la fréquence prédéterminée,
- lorsque la base centrale reçoit un signal radio-fréquence émis par un équipement périphérique à la fréquence prédéterminée, elle récupère le signal radio-fréquence reçu et réémet un signal radio-fréquence à la fréquence prédéterminée vers les équipements périphériques,
la synchronisation des signaux radio-fréquences permettant un transfert d'énergie simultané des équipements périphériques vers la base centrale sans avoir d'effet destructeur des signaux radio-fréquences entre eux.

Selon un autre mode de réalisation, la génération par un équipement périphérique d'un signal synchrone avec un signal détecté est réalisée par un circuit électronique de mise en forme.

Selon un mode de réalisation additionnel, la génération par un équipement périphérique d'un signal synchrone avec un signal détecté est réalisée par approximations successives en décalant la phase pour rechercher la résonance du signal détecté.

Selon un mode de réalisation supplémentaire, l'émission par un équipement périphérique d'un signal à une fréquence prédéterminée est réalisée par un oscillateur local de l'équipement périphérique.

Selon un autre mode de réalisation, l'émission par un équipement périphérique d'un signal à une fréquence prédéterminée est réalisée à partir d'un bruit électronique filtré à la fréquence prédéterminée.

Selon un mode de réalisation additionnel, la fréquence prédéterminée est 13,56 MHz.

Selon un mode de réalisation supplémentaire, à un instant donné, un seul équipement périphérique transmet des données à la base centrale.

Selon un autre mode de réalisation, la transmission des données vers la base centrale se fait de manière séquentielle entre les équipements périphériques selon un protocole d'anti-collision.

Selon un mode de réalisation additionnel, le transfert d'une partie au moins de l'énergie récupérée vers la base centrale est réalisé lorsque la quantité d'énergie récupérée atteint un seuil prédéterminé.

Selon un mode de réalisation supplémentaire, l'énergie est stockée au niveau des équipements périphériques.

Selon un autre mode de réalisation, l'énergie est stockée au niveau de la base centrale.

Selon un mode de réalisation additionnel, dans laquelle la base centrale transmet à un équipement périphérique un signal de déclenchement prédéterminé pour déclencher l'acquisition des données puis transmet un signal à l'équipement périphérique de manière récupérer les données acquises par identification radio-fréquence.

Les modes de réalisation de la présente invention concernent également un système de transfert de données selon la revendication 17.

Selon un autre aspect de la présente invention, les équipements périphériques comprennent des moyens d'identification permettant de fournir un identifiant de l'équipement périphérique correspondant, les moyens de communication permettant le transfert dudit identifiant de l'équipement périphérique correspondant vers la base centrale.

Selon un aspect additionnel de la présente invention, les équipements périphériques comprennent des moyens de mesure d'au moins une grandeur physique,
les moyens de communication permettant le transfert d'au moins une valeur de la, au moins une, grandeur physique mesurée des équipements périphériques vers la base centrale, et dans lequel la base centrale comprend des moyens de traitement des données transférées correspondant à la, au moins une, valeur de la, au moins une, grandeur physique mesurée.

Selon un autre mode de réalisation, la pluralité d'équipements périphériques comprend une antenne double boucle dans laquelle une première boucle est configurée pour émettre un signal radio-fréquence, la deuxième boucle étant configurée pour recevoir un signal radio-fréquence, les première et deuxième boucles étant configurées pour obtenir une impédance mutuelle nulle.

Selon un mode de réalisation additionnel, les antennes double boucle des équipements périphériques sont configurées de manière à émettre un signal radio-fréquence à une fréquence commune prédéterminée et en phase les uns avec les autres.

Selon un mode de réalisation supplémentaire, la pluralité d'équipements périphériques comprend des moyens de stockage de l'énergie récupérée.

Selon un autre mode de réalisation, la base centrale comprend des moyens de stockage de l'énergie récupérée.

Selon un mode de réalisation additionnel, le système d'acquisition correspond à un pèse-personne comportant des équipements périphériques disposés au niveau de la position des pieds de l'utilisateur sur le pèse-personne, les dits équipements périphériques comprenant des moyens de récupération de l'énergie fournie par la présence de l'utilisateur sur le pèse-personne et des moyens de mesure de la force associée à la présence de l'utilisateur, la base centrale comprenant des moyens de détermination du poids de l'utilisateur à partir des mesures fournies par les équipements périphériques et des moyens d'affichage du poids déterminé.

Selon un mode de réalisation supplémentaire, les moyens de récupération de l'énergie fournie par la présence de l'utilisateur sur le pèse-personne comprennent une génératrice magnétique et les moyens de mesure de la force associée à la présence de l'utilisateur comprennent des jauges de contrainte.

Selon un autre mode de réalisation, le système d'acquisition correspond à un défibrillateur comportant des équipements périphériques disposés à proximité du coeur de l'utilisateur, les dits équipements périphériques comprenant des moyens de récupération de l'énergie fournie par les battements du coeur de l'utilisateur, des moyens de mesure du rythme cardiaque et des moyens d'application d'une décharge électrique, la base centrale comprenant des moyens de détermination, en fonction des mesures du rythme cardiaque fournies par les équipements périphériques, de la nécessité d'appliquer une décharge électrique.

Selon un mode de réalisation additionnel, le système d'acquisition est destiné à la surveillance des constantes physiologiques d'une personne, les équipements périphériques comprenant des moyens de mesure de ces constantes physiologiques et des moyens de récupération de l'énergie fournie par le corps de la personne, la base centrale comprenant des moyens de sauvegarde et/ou d'affichage des paramètres physiologiques de la personne.

Selon un mode de réalisation supplémentaire, les moyens de mesure des constantes physiologiques d'une personne et les moyens de récupération de l'énergie fournie par le corps d'une personne comprennent des thermocouples.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma d'un système de transfert de données par identification radio-fréquence selon l'état de la technique;
- la figure 2 représente un schéma général d'un système de transfert de données selon les modes de réalisation de la présente invention;
- la figure 3 représente un schéma d'un système de transfert de données selon les modes de réalisation de la présente invention;
- la figure 4 représente un schéma d'un système de transfert de données selon un mode de réalisation de la présente invention;
- la figure 5 représente un exemple de réalisation des moyens de communication entre les équipements périphériques et la base centrale;
- la figure 6 représente un schéma global des modules d'émission et de réception d'un équipement périphérique selon un premier mode de réalisation,
- la figure 7 représente un schéma détaillé d'un exemple de réalisation d'un circuit de réception et d'amplification d'un équipement périphérique,
- la figure 8 représente un schéma détaillé d'un exemple de réalisation d'un circuit de mise en forme d'un équipement périphérique,
- la figure 9 représente un schéma détaillé d'un exemple de réalisation d'un circuit de contrôle d'un interrupteur d'un équipement périphérique,
- la figure 10 représente un schéma détaillé d'un exemple de réalisation d'un oscillateur local d'un équipement périphérique,
- la figure 11 représente un schéma détaillé d'un exemple de réalisation d'un amplificateur de puissance d'un équipement périphérique,
- la figure 12 représente un schéma détaillé d'un exemple de réalisation d'un filtre d'émission passe-bande d'un équipement périphérique,
- la figure 13 représente un schéma global des modules d'émission et de réception d'un équipement périphérique selon un deuxième mode de réalisation,
- la figure 14 représente un schéma de l'activité des équipements périphériques et de la base centrale lors d'un transfert de données des équipements périphériques vers la base centrale selon un premier processus,
- la figure 15 représente un schéma de l'activité des équipements périphériques et de la base centrale lors d'un transfert de données des équipements périphériques vers la base centrale selon un deuxième processus,
- la figure 16 représente un schéma d'un pèse-personne comprenant un système de transfert de données selon les modes de réalisation de la présente invention.

Sur toutes ces figures, les mêmes éléments portent les mêmes numéros de référence.

Dans la suite de la description, le terme « RFID » correspond à l'acronyme anglais identification par radio fréquence (Radio Frequency Identification);

Les modes de réalisation de la présente invention concernent un système de transfert de données 13, représenté de manière générale sur la figure 2, comprenant une pluralité d'équipements périphériques 15 comprenant des moyens de récupération d'énergie 19 destinés à alimenter, notamment, une base centrale 21 programmée pour recevoir des données transmises par les équipement périphériques 15 et réaliser un traitement des données. Le système de transfert de données 13 comprend également des moyens de communication radio-fréquence 24. Les moyens de communication radio-fréquence 24 étant destinés à la transmission des données 26 entre les équipements périphériques 15 et la base centrale 21 et permettant la transmission d'au moins une partie de l'énergie récupérée 28 au niveau des équipements périphériques 15 vers la base centrale 21. Le transfert d'énergie est réalisé par un couplage inductif des signaux radio-fréquences 27 émis par les équipements périphériques 15.

Selon un aspect de la présente invention, les équipements périphériques 15 comprennent des moyens d'identification, par exemple une mémoire comprenant un identifiant, de sorte que le transfert des données comprend le transfert de l'identifiant associé à l'équipement périphérique 15 vers la base centrale 21.

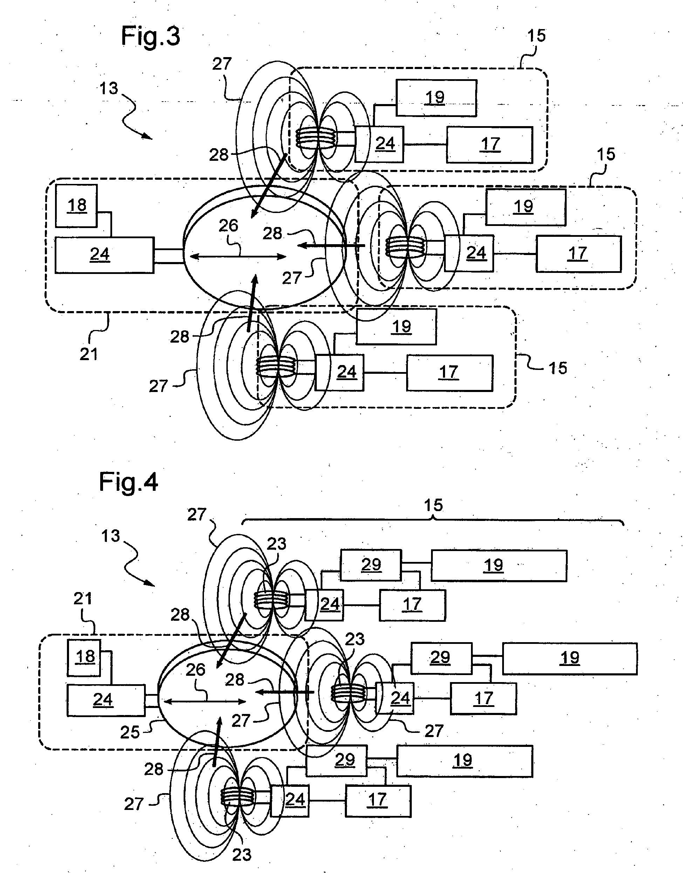

Selon un autre aspect de la présente invention représenté sur la figure 3, les équipements périphériques 15 comprennent des moyens de mesure 17 d'une grandeur physique et transmettent les données correspondant aux valeurs des mesures à la base centrale 21 via les moyens de communication 24, la base centrale comprenant des moyens de traitement 18 des valeurs des mesures transmises par les équipements périphériques 15.
Les moyens de mesure 17 et de récupération d'énergie 19 peuvent être confondus ou peuvent être distincts, de même que la source d'énergie et la grandeur physique à mesurer. De plus, les moyens de récupération d'énergie 19 récupèrent l'énergie disponible dans leur environnement, par exemple un mouvement, de la chaleur ou un rayonnement...et convertissent cette énergie en énergie électrique afin de pouvoir transférer cette énergie à la base centrale 21 via les moyens de communications radio-fréquence 24.

Selon un premier mode de réalisation représenté sur la figure 4, la base centrale 21 est passive et comprend une antenne 25. Les équipements périphériques 15, qui sont au nombre de trois, comprennent des moyens de stockage de l'énergie récupérée comme par exemple une batterie rechargeable 29. Cette énergie sert d'une part à alimenter les moyens de mesure 17 et d'autre part à alimenter les moyens de communication 24 ainsi que la base centrale passive 21.

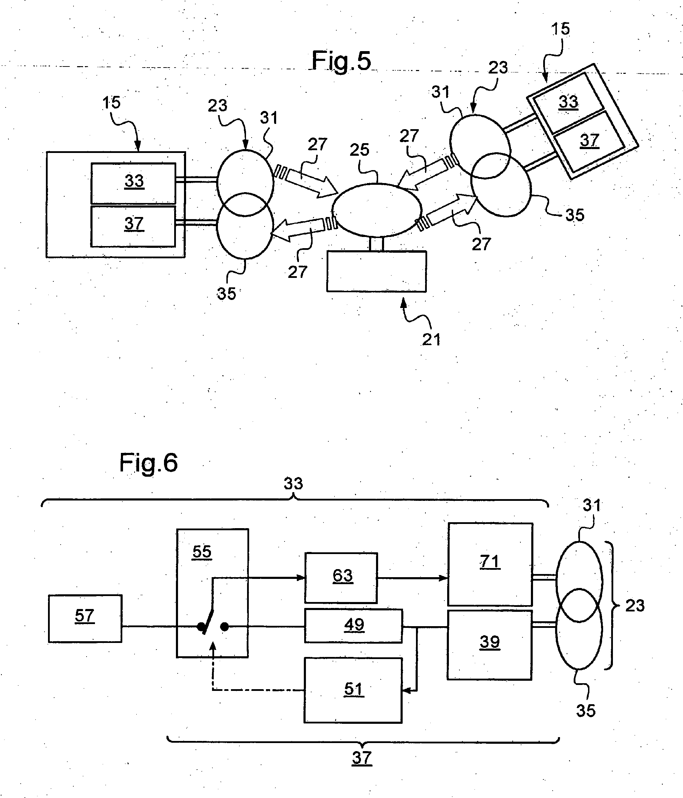

Les moyens de communication radio-fréquence 24 sont représentés en détail sur la figure 5 dans le cas de deux équipements périphériques 15. Les moyens de communication 24 comprennent, au niveau de chaque équipement périphérique 15, une antenne double boucle 23. Une première boucle 31 connectée à un module d'émission 33 est configurée pour émettre des signaux radio-fréquences 27 et une deuxième boucle 35 connectée à un module de réception 37 est configurée pour recevoir des signaux radio-fréquences 27. Afin d'éviter des perturbations entre les signaux émis et reçus, l'antenne double boucle 23 est configurée de manière à obtenir une impédance mutuelle nulle entre les deux boucles 31 et 35.

De plus, la base centrale 21 comprend une antenne 25 destinée à recevoir les signaux radio-fréquences 27 émis par les équipements périphériques 15 et à réémettre des signaux radio-fréquences 27 vers les équipements périphériques 15. Les signaux réémis étant les signaux reçus et modifiés pour insérer des données à transmettre aux équipements périphériques 15.

Afin de transmettre des données, ces signaux radio-fréquences 27 sont modulés, par exemple par une modulation d'amplitude ou de fréquence au niveau des équipements périphériques 15 et par une modulation de charge au niveau de la base centrale 21. La porteuse utilisée pour la modulation a une fréquence prédéterminée, par exemple 13,56 MHz, sur laquelle sont accordées les antennes 23 et 25 des équipements périphériques 15 et de la base centrale 21.

De plus, dans le présent mode de réalisation, les moyens de récupération d'énergie 19 sont les mêmes pour tous les équipements périphériques 15 et sont alimentés par une source d'énergie commune. Le protocole de communication avec la base centrale 21 pour transmettre les données correspondant aux mesures est initialisé lorsque le niveau d'énergie emmagasinée au niveau des moyens de stockage 29 correspond à un seuil prédéterminé ou à un instant prédéfini en utilisant des horloges internes situées au niveau des équipements périphériques. Ainsi, l'établissement des protocoles de communication des équipements périphériques 15 se fait de manière quasi-simultanée.
Afin d'éviter un effet destructeur des différents signaux radio-fréquences 27 issus des différents équipements périphériques 15, une synchronisation de l'émission de ces signaux radio-fréquences 27 est nécessaire.

Deux protocoles distincts permettent une telle synchronisation:
Selon un premier protocole de synchronisation, l'initialisation de la communication radiofréquence comprend les étapes suivantes:
   - lorsque le processus de communication entre l'équipement périphérique 15 et la base centrale 21 est déclenché, l'équipement périphérique 15 procède à une phase d'écoute pendant laquelle la boucle 35 de l'antenne 23 est configurée pour détecter un éventuel signal radio-fréquence 27 émis par la base centrale 21 à une fréquence prédéterminée, 13,56MHz par exemple, sur laquelle l'antenne 25 de la base centrale est accordée,
   - si un signal radio-fréquence émis (réémis en réalité) par la base centrale 21 est détecté, l'équipement périphérique 15 utilise alors ce signal radio-fréquence détecté pour générer et transmettre, à la base centrale 21, un signal radio-fréquence synchrone et en phase avec le signal détecté. La génération du signal radio-fréquence synchrone est réalisée, par exemple, par un circuit électronique de mise en forme qui permet de créer un signal synchrone avec le signal reçu.
   - si aucun signal radio-fréquence émis par la base centrale 21 n'est détecté, l'équipement périphérique émet alors un signal radio-fréquence à la fréquence prédéterminée, 13,56 MHz par exemple,
   - lorsque la base centrale 21 reçoit un signal radio-fréquence émis par un équipement périphérique 15 à la fréquence prédéterminée, la base centrale 21 récupère le signal radio-fréquence reçu et réémet un signal à la fréquence prédéterminée vers les équipements périphériques 15.

Ainsi, l'ensemble des signaux radio-fréquences 27 émis par les équipements périphériques 15 sont synchronisés ce qui permet un transfert d'énergie simultané des équipements périphériques 15 vers la base centrale 21 sans avoir d'effet destructeur des signaux radio-fréquences 27 entre eux.

L'émission par un équipement périphérique 15 d'un signal radio-fréquence 27 à une fréquence prédéterminée peut être réalisée par un oscillateur local accordé sur cette fréquence mais peut aussi être réalisée à partir de bruit en filtrant ce bruit à la fréquence prédéterminée.

Un exemple de réalisation des moyens de communication 24 et plus particulièrement des modules d'émission 33 et de réception 37 permettant la génération d'un signal synchrone avec un signal reçu ou à une longueur d'onde prédéterminée est présenté sur la figure 6.

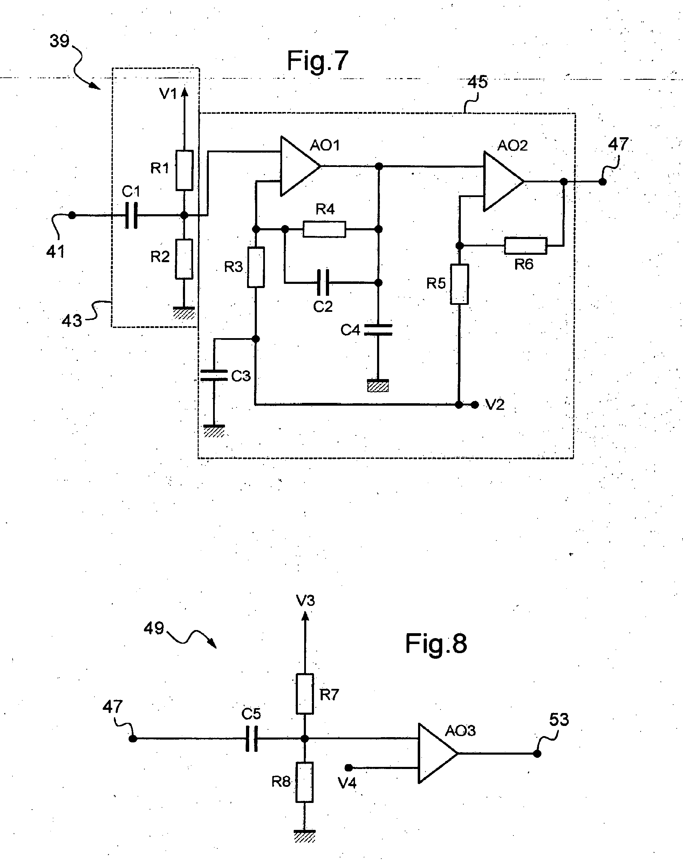

La boucle de réception 35 de l'antenne 23 est reliée à un circuit de réception et d'amplification 39 dont le schéma électrique est représenté sur la figure 7.

L'entrée 41 est reliée à un circuit de détection de passage à zéro 43 comprenant un condensateur C1 relié au point milieu d'une branche comprenant deux résistance R1 et R2 montées en série. La résistance R1 est reliée à un potentiel de tension V1 et la résistance R2 est reliée à la masse. Ce circuit 43 de détection de passage à zéro permet de « positionner » le signal au centre de la plage d'amplification pour être amplifié par le circuit amplificateur 45.

Le circuit amplificateur 45 comprend un premier et un deuxième amplificateurs opérationnels AO1 et A02 montés en cascade par la borne d'entrée positive du deuxième amplificateur A02, la borne d'entrée positive du premier amplificateur AO1 étant reliée au point milieu du circuit de détection de passage à zéro 43. Une résistance R3 est connectée entre la borne d'entrée négative de l'amplificateur AO1 et un potentiel de tension V2 relié à la masse via un condensateur C3. Une résistance R4 en parallèle avec un condensateur C2 relie la borne d'entrée négative à la borne de sortie de l'amplificateur AO1. La borne de sortie de l'amplificateur AO1 étant reliée à la masse via un condensateur C4. Une résistance R5 est montée entre la borne d'entrée négative de l'amplificateur A02 et le potentiel de tension V2. Une résistance R6 est connectée entre la borne d'entrée négative et la borne de sortie de l'amplificateur AO2. Le signal amplifié par le circuit amplificateur 45 est alors transmis à la sortie 47 du circuit de réception et d'amplification 39 vers le circuit de mise en forme 49 d'une part et vers le circuit de contrôle de l'interrupteur 51 d'autre part.

Le circuit de mise en forme 49 est représenté sur la figure 8 et comprend un condensateur C5 relié d'une part à l'entrée 47 du circuit de mise en forme et d'autre part au point milieu d'une branche comprenant deux résistances R7 et R8 montées en série. La résistance R7 est reliée à un potentiel de tension V3 et la résistance R8 est reliée à la masse. Le point milieu est relié à la borne d'entrée positive d'un amplificateur opérationnel AO3. La borne d'entrée négative de l'amplificateur A03 est reliée à un potentiel de tension V4. A la sortie 53 du circuit de mise en forme 49, on obtient un signal créneau qui est transmis vers l'interrupteur 55.
Le circuit de contrôle 51 de l'interrupteur 55 permet de contrôler la position de l'interrupteur 55 qui peut être relié à la sortie 53 du circuit de mise en forme 49 ou à un oscillateur local 57 en fonction de la réception ou non d'un signal sur la boucle de réception 35 de l'antenne 23.

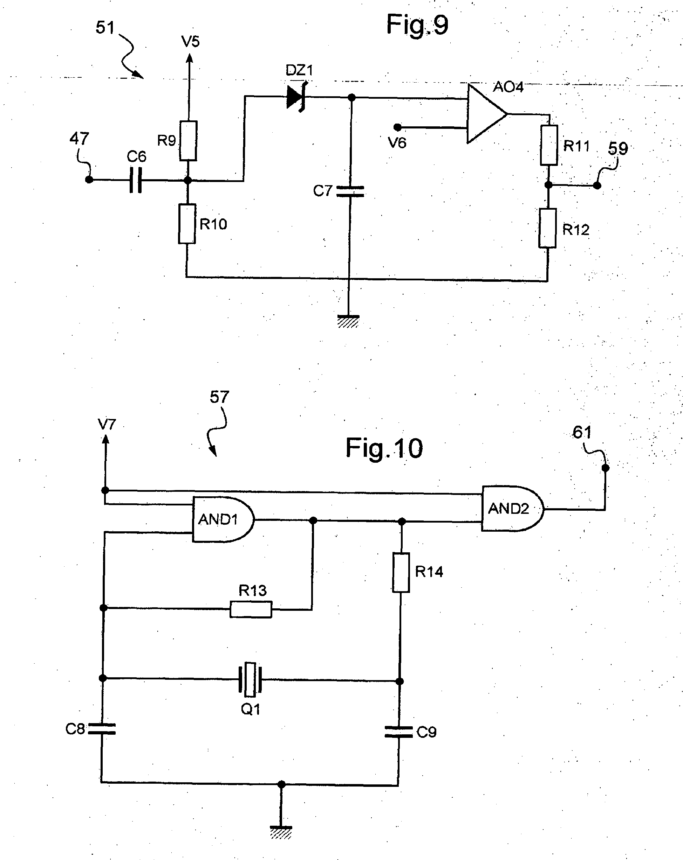

Les détails du circuit de contrôle 51 sont représentés sur la figure 9. Le circuit de contrôle 51 comprend un condensateur C6 relié au point milieu d'une branche comprenant deux résistances R9 et R10 montées en série, la résistance R9 étant reliée à un potentiel de tension V5 et la résistance R10 étant reliée à la masse. Le point milieu est connecté à une diode Zener DZ1 reliée à la borne d'entrée positive d'un amplificateur A04 et à la masse via un condensateur C7. La borne d'entrée négative de l'amplificateur A04 est reliée à un potentiel de tension V6 et la borne de sortie de l'amplificateur A04 est reliée à la masse par l'intermédiaire de deux résistances R11 et R12 montées en série dont le point milieu est la borne de sortie 59 du circuit de contrôle 51. Le potentiel de tension V6 correspond au seuil de détection. On compare ainsi la tension moyenne du signal à la tension seuil V6 pour déterminer la présence d'un signal reçu au niveau de la boucle de réception 35. Si un signal est reçu, la tension à la sortie 59 du circuit de contrôle 51 commande la connexion de l'interrupteur sur la sortie 53 du circuit de mise en forme 49 sinon l'interrupteur est connecté à l'oscillateur local 57.

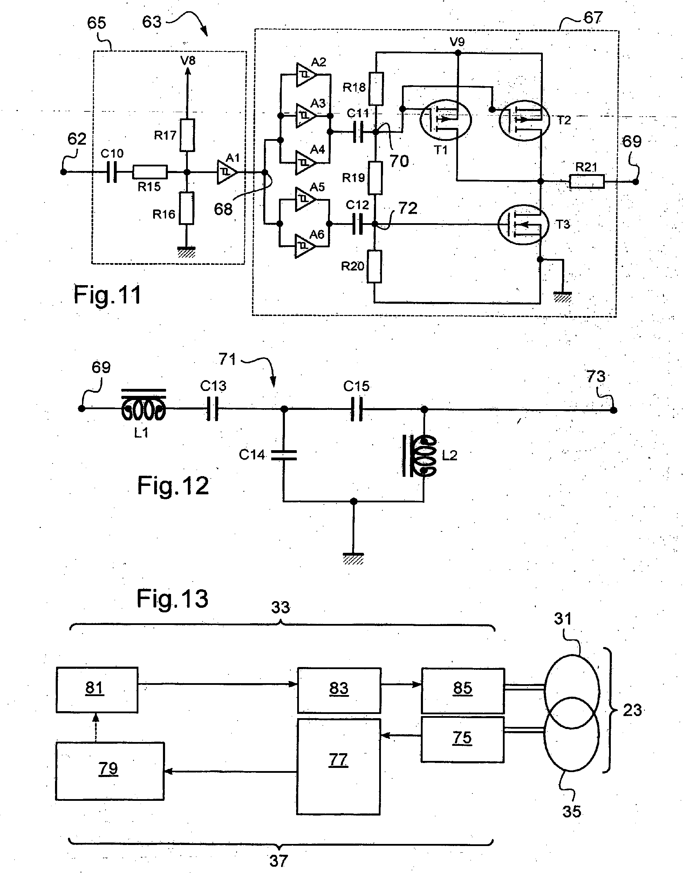

L'oscillateur local 57 peut être modélisé tel que représenté sur la figure 10. L'oscillateur local comprend un quartz Q1 relié d'un côté à la masse via un condensateur C9 et à une résistance R14 reliée à la sortie d'un connecteur logique « ET » AND1 et d'un autre côté à la masse via un condensateur C8 et à une première borne d'entrée du connecteur AND1. Une résistance R13 relie la première borne d'entrée et la borne de sortie du connecteur AND1. La deuxième borne d'entrée du connecteur AND1 est reliée à une source de tension V7 et à une première borne d'entrée d'un connecteur logique « ET » AND2. La borne de sortie du connecteur AND1 est reliée à la deuxième borne d'entrée du connecteur AND2. La borne de sortie du connecteur AND2 correspond à la sortie 61 de l'oscillateur local 57. Le signal créé en sortie 61 de l'oscillateur local 57 étant envoyé vers l'interrupteur 55.
Le signal de sortie de l'interrupteur 55 (provenant soit du circuit de mise en forme 51 soit de l'oscillateur local 57) est envoyé sur l'entrée 62 d'un amplificateur de puissance 63 dont les détails sont représentés sur la figure 11.

L'amplificateur de puissance 63 comprend un premier étage d'amplification 65 comprenant un condensateur C10 monté en série avec une résistance R15 reliée au point milieu d'une branche comprenant une première et une deuxième résistance R16 et R17 montées en série, la première résistance R16 étant reliée à la masse et la deuxième résistance R17 étant reliée à un potentiel de tension V8. Le point milieu est également relié à une bascule de Schmitt A1, la sortie de la bascule de Schmitt A1 étant reliée à l'entrée 68 du deuxième étage d'amplification 67. L'entrée 68 est reliée à une première branche comprenant trois bascules de Schmitt A2, A3, A4 montées en parallèle, en série avec un condensateur C11, ladite première branche étant connectée à un point de liaison 70 et à une deuxième branche comprenant deux bascules de Schmitt montées en parallèle, en série avec un condensateur C12, ladite deuxième branche étant connectée à un point de liaison 72. Les points de liaison 70 et 72 correspondent aux points intermédiaires d'une branche comprenant trois résistances R18, R19 et R20 en série, le point de liaison 70 étant situé entre les résistances R18 et R19 et le point de liaison 72 étant situé entre les résistances R19 et R20. La résistance R18 est connectée à un potentiel de tension V9 et la résistance R20 est connectée à la masse. Deux transistor MOSFET de type p T1 et T2 ont leur grille reliée au point de liaison 70, leur source reliée au potentiel de tension V9 et leur drain relié à une première borne d'une résistance R21. Un transistor MOSFET de type n T3 a sa grille reliée au point de liaison 72, sa source reliée à la masse et son drain relié à la première borne de la résistance R21, la deuxième borne de la résistance R21 étant reliée à la sortie 69 de l'amplificateur de puissance 63.

En sortie 69 de l'amplificateur de puissance 63, le signal amplifié est transmis à un filtre d'émission passe-bande 71 de manière à sélectionner la fréquence désirée, par exemple 13,56MHz.

Un exemple de filtre d'émission passe-bande 71 est décrit sur la figure 12. L'entrée du filtre 71 correspond à la sortie 69 de l'amplificateur 63 et est connectée à une branche comprenant une inductance L1 et deux condensateurs C13 et C15 montés en série et reliant la sortie 73 du filtre 71. Un condensateur C14 en série avec une inductance L2 sont montés en parallèle avec le condensateur C15. De plus, la connexion entre le condensateur C14 et l'inductance L2 est reliée à la masse.

Les valeurs des inductances et des condensateurs permettent de déterminer les fréquences de coupure du filtre et ainsi d'ajuster la fréquence que l'on veut émettre.

Ainsi, les équipements décrits permettent d'émettre un signal synchrone et en phase avec un signal reçu ou d'émettre un signal à une fréquence donnée. De plus, le signal émis à une fréquence donnée peut être généré à partir de bruit, par exemple le bruit électronique de l'amplificateur de puissance, ce bruit étant filtré pour obtenir la fréquence désirée pour le signal émis, ce qui permet de se passer de l'oscillateur local 57.

Selon un deuxième protocole de synchronisation, la synchronisation des signaux radiofréquences émis par les moyens de communication des équipements périphériques 15 est obtenue en recherchant la résonance du signal reçu par l'antenne par approximations successives d'un décalage de phase.

La figure 13 représente un exemple de réalisation des modules de réception 37 et d'émission 33 permettant d'obtenir une synchronisation par recherche de la résonance.
Le signal radio-fréquence reçu au niveau de la boucle de réception 35 de l'antenne 23 est transmis à un circuit de réception 75 pour être démodulé puis est envoyé vers un module d'analyse de résonance 77 dans lequel une analyse du signal permet de déterminer son amplitude. En fonction de l'amplitude déterminée au niveau du module d'analyse de résonance 77, un signal est envoyé à un module de décalage de phase 79 qui va commander un décalage du déphasage du signal émis par l'oscillateur local 81. Ainsi, la phase du signal est asservie en fonction de l'amplitude mesurée au niveau du module d'analyse de résonance 77. L'ajustement de la phase se fait, par exemple, par approximations successives (faible décalage de phase), et permet de tendre vers le maximum de résonance. Le signal généré par l'oscillateur local est transmis à un circuit de mise en forme du signal 83 puis à un circuit d'émission 85 alimentant la boucle d'émission 31 de l'antenne 23.

La recherche du maximum de résonance est permanente et le sens du décalage de phase est déterminé en fonction de l'historique de la mesure: en cas de décroissance de l'amplitude après un décalage de phase, le sens du décalage de phase est inversé.
Ainsi, l'ensemble des équipements périphériques est synchronisé avec la résonance d'un signal reçu, ce qui permet d'obtenir une synchronisation des équipements périphériques 15 entre eux.

Une fois la synchronisation des signaux issus des différents équipements périphériques 15 réalisée, les équipements périphériques 15 peuvent transmettre de l'énergie à la base centrale 21 sans qu'il n'y ait d'effet destructeur entre les signaux reçus au niveau de la base centrale 21. Lorsque la quantité d'énergie reçue est suffisante pour activer la base centrale 21, cette dernière réémet un signal d'activation (correspondant par exemple à un simple bip) par une modulation de charge des signaux reçus pour indiquer aux équipements périphériques 15 qu'ils peuvent désormais lui transférer des données.

Afin d'éviter une perte des données, un protocole anti-collision est nécessaire. Ce protocole anti-collision permet d'éviter que les équipements périphériques 15 émettent des données simultanément. Pour cela, des créneaux temporels sont alloués aux différents équipements périphériques 15, en fonction par exemple d'un numéro d'identification affecté à la fabrication ou à l'initialisation du système de transfert de données 13. Durant un créneau temporel, l'équipement périphérique 15 dont le numéro d'identification est associé à ce créneau peut émettre une trame de données vers la base centrale 21.

Deux alternatives sont alors possibles en fonction du mode de fonctionnement de la base centrale:
- Si l'énergie fournie par un seul équipement périphérique 15 est suffisante pour permettre à la base centrale 21 de recevoir les données alors les différents équipements périphériques 15 émettent un signal chacun à leur tour pendant le créneau temporel qui leur est alloué, ce signal permettant à la fois de fournir de l'énergie à la base centrale 21 et de transmettre les données correspondant aux mesures réalisées par les moyens de mesure 17 de l'équipement périphérique 15. Par ailleurs, la durée de ces créneaux temporels peut varier en fonction du protocole choisi et peut, par exemple, correspondre à 10 ou 20 ms.

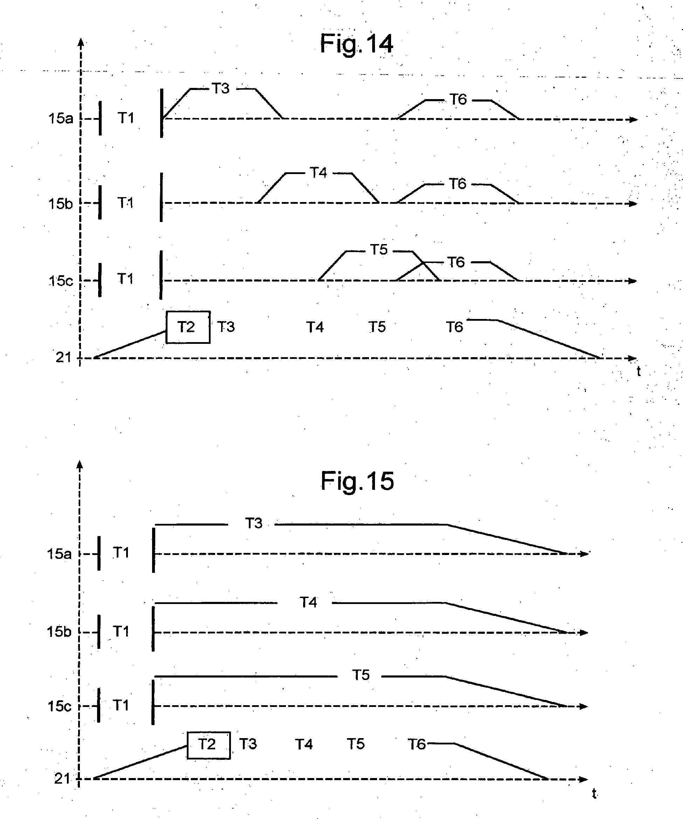

Un diagramme représentant les différentes étapes de transmission des données dans la cas de trois équipements périphériques 15a, 15b et 15c et d'une base centrale 21 en fonction du temps t est représenté sur la figure 14.

La phase T1 commune à tous les équipements périphériques 15 correspond à la phase de synchronisation selon l'un des protocoles de synchronisation décrits précédemment. A la fin de la phase de synchronisation, la base centrale 21 reçoit de l'énergie et lorsque cette énergie atteint un seuil prédéterminé, la phase T2 correspondant au renvoi par la base centrale 21 d'un signal d'activation vers les équipements périphériques 15 est initiée. A la réception du signal d'activation, le premier équipement périphérique, ici l'équipement périphérique 15a, envoie les données correspondant à ses mesures pendant la phase T3, la phase T3 correspondant à un créneau temporel prédéterminé permettant à un équipement périphérique 15 de transférer les données correspondant aux mesures. Puis, à la fin de la phase T3, le deuxième équipement périphérique 15b envoie les données correspondant à ses mesures pendant la phase T4. Puis, à la fin de la phase T4, le troisième équipement périphérique 15c envoie les données correspondant à ses mesures pendant la phase T5. Après la phase T5, la phase T6 correspond au traitement des données par la base centrale 21, ce traitement peut nécessiter plus d'énergie que la réception des données de sorte que tous les équipements périphériques 15 transmettent un signal destiné à transférer de l'énergie vers la base centrale 21 pendant la phase T6. Dans le cas où l'énergie d'un seul équipement périphérique 15 est suffisante pour alimenter la base centrale 21 pendant le traitement des données, seul le troisième équipement périphérique 15c, par exemple, continue à émettre pour transmettre de l'énergie pendant la phase T6. Une fois la phase T6 terminée, la base centrale 21 peut, par exemple, envoyer un signal de désactivation vers les équipements périphériques 15 (toujours par modulation de charge) pour les informer de la fin du traitement des données afin qu'ils cessent d'émettre.
- Si la base centrale 21 nécessite l'énergie fournie par l'ensemble des équipements périphériques 15 pour recevoir les données, l'ensemble des équipements périphériques 15 émettent des signaux permettant la transmission d'énergie pendant toute la durée de la transmission des données et les équipements périphériques 15 envoient chacun à leur tour les données correspondant aux mesures réalisées par leurs moyens de mesure 17.

Un diagramme représentant les différentes étapes de transmission des données dans le cas de trois équipements périphériques 15a, 15b et 15c et d'une base centrale 21 en fonction du temps t est représenté sur la figure 15.

La phase T1 est commune avec le mode de réalisation précédent et correspond à la synchronisation des équipements périphériques par l'une des méthodes décrites précédemment. A la fin de la phase T1, les équipements périphériques 15a, 15b et 15c émettent un signal pour transférer de l'énergie à la base centrale 21. Lorsque le niveau d'énergie de la base centrale 21 est suffisant pour recevoir des données, la base centrale 21 réémet un signal d'activation (phase T2). Le premier équipement périphérique 15a transmet alors les données correspondant à ses mesures (phase T3). A la fin de la phase T3, le deuxième équipement périphérique 15b transmet les données correspondant à ses mesures (phase T4) puis à la fin de la phase T4, le troisième équipement périphérique 15c transmet les données correspondant à ses mesures. De plus, pendant les phases T3, T4 et T5, tous les équipements périphériques 15 (15a, 15b et 15c) continuent à émettre pour transférer de l'énergie à la base centrale 21. Pour la phase T6, les équipement périphériques 15 continuent à émettre pour transférer de l'énergie à la base centrale 21 et permettre le traitement des données. Une fois le traitement des données réalisé, la base centrale 21 peut, par exemple, réémettre un signal de désactivation vers les équipements périphériques 15 pour les informer de la fin du traitement des données afin qu'ils arrêtent d'émettre.

De plus, le traitement des données peut comprendre, par exemple, un calcul permettant d'obtenir la valeur d'un paramètre prédéfini, une sauvegarde des données et/ou d'un paramètre calculé, l'affichage des données et/ou d'un paramètre calculé...

Par ailleurs, afin que la transmission des données ne perturbent pas la synchronisation des signaux et donc le transfert d'énergie vers la base centrale 21, le taux de modulation des signaux est limité (<100%).

Selon un deuxième mode de réalisation, la base centrale 21 comprend des moyens de stockage de l'énergie transmise par les équipements périphériques 15 comme par exemple une batterie rechargeable. Ainsi, lorsque les équipements périphériques 15 récupèrent de l'énergie, ils transmettent alors au moins une partie de cette énergie à la base centrale 21 qui stocke alors cette énergie. Cette énergie permet d'alimenter un mode veille de la base centrale 21 qui déclenche de façon programmable un cycle d'acquisition de mesures. Le cycle d'acquisition de mesure se déroule selon un protocole d'identification par radio-fréquence (« RadioFrequency Identification (RFID)» en anglais) dans lequel les équipements périphériques 15 agissent de manière passive comme des transpondeurs, l'énergie nécessaire aux équipements périphériques 15 étant fournie par la base centrale 21. Ainsi, dans ce mode de réalisation, les signaux sont émis par la base centrale 21 et une modulation de charge est réalisée au niveau des équipements périphériques 15 afin de retransmettre les données correspondant aux mesures réalisées vers la base centrale 21. Ce mode de réalisation permet donc d'utiliser les protocoles de communication RFID normalisés. Cependant, ce mode de réalisation repose sur un double transfert d'énergie par couplage inductif ce qui entraîne de fortes pertes.

Afin de mieux comprendre le modes de réalisation de la présente invention, différentes applications de ces modes de réalisation vont maintenant être décrites en détail.

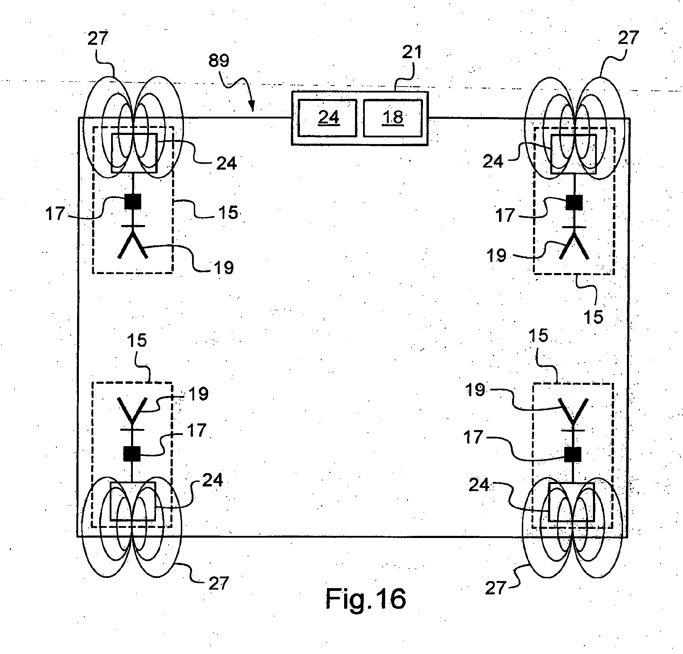

Une première application concerne un pèse-personne 89 représenté sur la figure 16 dont les équipements périphériques 15 comprennent des moyens de mesure 17 de la force créée par la présence d'un utilisateur sur le pèse-personne 89. Ces moyens de mesure sont, par exemple, des jauges de contraintes situées sur un corps d'épreuve au niveau des pieds de l'utilisateur. Les équipements périphériques comprennent également des moyens de récupération d'énergie 19, par exemple une microgénératrice magnétique dans laquelle l'énergie apportée par la présence de l'utilisateur sur le pèse-personne est transposée en un mouvement de rotation puis convertie en électricité par l'intermédiaire d'un alternateur, qui permettent de récupérer l'énergie fournie par la présence de l'utilisateur. Dans l'exemple de la figure 16, le système de transfert de données, c'est à dire le pèse-personne 89, comprend quatre équipements périphériques 15 qui sont situés à l'avant et à l'arrière de la position des pieds de l'utilisateur sur le pèse-personne 89 afin de récupérer un maximum d'énergie. Les équipements périphériques comprennent également des moyens de communication radio-fréquences 24, par exemple un circuit électrique d'émission-réception tel que présenté sur la figure 5 couplé à une antenne double boucle configurée en impédance mutuelle nulle permettant de transférer de l'énergie à la base centrale 21.

La base centrale 21 comprend des moyens de communication 24 permettant la réception des signaux radio-fréquences 27 émis par les équipements périphériques 15 et des moyens de traitement 18 permettant de déterminer le poids de l'utilisateur en fonction des données correspondant aux mesures des jauges de contraintes transmises par les équipements périphériques 15 et des moyens d'affichage de ce poids. Ainsi, lorsque l'utilisateur monte sur le pèse-personne 89, son poids entraîne la microgénératrice ce qui créé une tension électrique qui permet d'alimenter d'une part les jauges de contraintes et d'autre part les moyens de communication radio-fréquences 24 et de transférer de l'énergie vers la base centrale 21. De plus, le poids de l'utilisateur entraine une déformation des jauges de contraintes, ce qui permet de déterminer le poids de l'utilisateur. Les signaux radio-fréquences 27 transmis à la base centrale 21 lui permettent alors de déterminer le poids de l'utilisateur et d'afficher ce poids. Ainsi, un tel pèse-personne 89 fonctionne sans apport d'énergie extérieure (batterie ou branchement sur secteur) et ne requiert pas de câbles de connexion entre les jauges de contraintes et la base centrale 21.

Une deuxième application concerne un défibrillateur. Certaines personnes ayant des problèmes cardiaques nécessitent l'utilisation d'un défibrillateur implanté, c'est-à-dire un appareil qui surveille en permanence les battements du coeur et lorsque cela est nécessaire envoie une décharge électrique pour stimuler ou réguler le coeur, les électrodes de mesure et de stimulation étant implantées directement sur le coeur. La présente application consiste à récupérer une partie de l'énergie fournie par les battements du coeur, par exemple par des éléments piézo-électriques ou électromagnétiques, afin d'alimenter d'une part les électrodes pour réaliser les mesures du rythme cardiaque et d'autre part alimenter des moyens de communication radio-fréquences permettant de transférer le résultat des mesures à une base centrale située, par exemple, sur le lit ou le siège de l'utilisateur. De plus, l'énergie récupérée peut également servir à recharger une batterie destinée à assurer la décharge électrique. Cependant, dans cette application, une surveillance (monitoring) du niveau de la batterie destinée à assurer la décharge électrique peut être prévue ainsi que d'autres moyens de recharge de cette batterie au cas où la recharge par les équipements périphériques soit insuffisante pour générer une décharge électrique adéquate.
Les mesures du rythme cardiaque peuvent ainsi être transférer en permanence vers la base centrale qui peut par exemple afficher ces données sous forme d'un tracé et déterminer si l'envoi d'une décharge électrique est nécessaire ou pas, par exemple si le rythme cardiaque dépasse un seuil prédéterminé.
Ainsi, en récupérant l'énergie fournie par les battements du coeur, la présente application permet de supprimer la présence de câbles entre les électrodes implantées et la base centrale et ainsi améliorer le confort de l'utilisateur.
De plus, les électrodes implantées peuvent être utilisées lors d'examens à l'hôpital en utilisant une antenne radio-fréquence externe.

Une troisième application concerne un dispositif de surveillance des constantes physiologiques d'une personne située par exemple au niveau d'un lit d'hôpital, les équipements périphériques comprenant des moyens de mesure des constantes physiologiques comme par exemple la tension, le rythme cardiaque, la température...ainsi que des moyens de récupération de l'énergie associée à l'environnement de ces mesures comme par exemple la récupération de l'énergie thermique par des thermocouples, de l'énergie mécanique associée aux mouvements internes et externes du corps de la personne par des éléments piézo-électriques. L'énergie récupérée permet ainsi d'alimenter les capteurs et de communiquer avec la base centrale. La base centrale peut être constituée par exemple d'un dispositif constitué d'une antenne relais capable de recevoir les données issues des équipements périphériques et de sauvegarder ces données, ce dispositif étant situé à proximité du patient, par exemple sur ses vêtements. Les données mémorisées par la base centrale étant récupérées par un lecteur de type RFID externe au système de transfert de données. Par ailleurs, la sauvegarde des données peut également se faire au niveau des moyens de mesure.

Les modes de réalisation de la présente invention permettent donc d'utiliser les équipements périphériques d'un réseau de capteurs comme des micro-générateurs capables de s'auto-alimenter et d'alimenter une base centrale réalisant le traitement des données mesurées par les capteurs tout en s'affranchissant de câbles entre les équipements périphériques et la base centrale. De tels modes de réalisation permettent d'optimiser l'utilisation de l'énergie fournie par l'environnement du système de transfert de données et d'envisager l'implantation de systèmes de transfert de données dans des environnements difficiles d'accès.

## Revendications

1. Méthode de gestion d'un système de transfert de données (13) comprenant
- une pluralité d'équipements périphériques (15),
- une base centrale (21),
le système de transfert de données (13) comprenant également des moyens de communication radio-fréquence permettant le transfert de données entre les équipements périphériques et la base centrale,
la méthode étant **caractérisée en ce que**
- on récupère de l'énergie au niveau des équipements périphériques (15) et,
- on transfère une partie au moins de l'énergie récupérée vers la base centrale (21) via les moyens de communication radio-fréquence (24), la base centrale (21) comportant une antenne (25) accordée sur une fréquence prédéterminée, les équipements périphériques (15) comprenant une antenne double boucle (23) présentant une impédance mutuelle nulle, une première boucle (31) assurant l'émission d'un signal radio-fréquence (27) et une deuxième boucle (35) assurant la réception d'un signal radio-fréquence (27), la synchronisation des signaux radio-fréquence (27) émis par la plurality d'antennes (23) comprenant les étapes suivantes:
- lorsque le processus de communication de l'équipement périphérique (15) à la base centrale (21) est déclenché, une phase d'écoute est réalisée par la boucle (35) de l'antenne (23) configurée pour recevoir un signal radio-fréquence (27) afin de détecter un éventuel signal radio-fréquence (27) émis par la base centrale (21),
- si un signal radio-fréquence (27) émis par la base centrale (21) est détecté, l'équipement périphérique (15) utilise alors le signal radio-fréquence (27) détecté pour transmettre, à la base centrale (21), un signal radio-fréquence (27) synchrone et en phase avec le signal radio-fréquence (27) détecté,
- si aucun signal radio-fréquence (27) émis par la base centrale (21) n'est détecté, l'équipement périphérique (15) émet alors un signal radio-fréquente (27) à la fréquence prédéterminée,
- lorsque la base centrale (21) reçoit un signal radio-fréquence (27) émis par un équipement périphérique (15) à la fréquence prédéterminée, elle récupère le signal radio-fréquence (27) reçu et réémet un signal radio-fréquence (27) à la fréquence prédéterminée vers les équipements périphériques (15),
la synchronisation des signaux radio-fréquences (27) permettant un transfert d'énergie simultané des équipements périphériques (15) vers la base centrale (21) sans avoir d'effet destructeur des signaux radio-fréquences (27) entre eux.

2. Méthode de gestion selon la revendication 1 dans laquelle les équipements périphériques comprennent des moyens d'identification et dans laquelle les données transférées entre un équipement périphérique (15) et la base centrale (21) comprennent un identifiant dudit équipement périphérique (15).

3. Méthode de gestion selon la revendication 1 ou 2 dans laquelle les équipements: périphériques (15) comprennent des moyens de mesure (17) d'au moins une grandeur physique, les données transférées entre un équipement périphérique (15) et la basse centrale (21) comprennent au moins une valeur de la, au moins une, grandeur physique mesurée et la base centrale (21) comprend des moyens de traitement des données transférées correspondant à la, au moins une, valeur de la, au moins une, grandeur physique mesurée.

4. Méthode de gestion selon l'une des revendications précédentes, dans laquelle le transfert d'énergie des équipements périphériques (15) vers la base centrale (21) est réalisé par un couplage inductif des moyens de communication radio-fréquence (24).

5. Méthode de gestion selon l'une des revendications précédentes, dans laquelle la récupération d'énergie comprend la conversion d'une énergie disponible au niveau des équipements périphériques (15) en énergie électrique.

6. Méthode de gestion selon l'une des revendications précédentes, dans laquelle la génération par un équipement périphérique (15) d'un signal radio-fréquence (27). synchrone avec un signal radio-fréquence (27) détecté est réalisée par un circuit électronique. de mise en forme.

7. Méthode de gestion selon l'une des revendications 1 à 5, dans laquelle la génération par un équipement périphérique (15) d'un signal radio-fréquence (27) synchrone avec un signal radio-fréquence (27) détecté est réalisée par approximations successives en décalant la phase pour rechercher la résonance du signal détecté.

8. Méthode de gestion selon l'une des revendications précédentes, dans laquelle l'émission par un équipement périphérique (15) d'un signal radio-fréquence (27) à une fréquence prédéterminée est réalisée par un oscillateur local (57) de l'équipement périphérique (15).

9. Méthode de gestion selon l'une des revendications 1 à 7, dans laquelle l'émission par un équipement périphérique (15) d'un signal radio-fréquence (27) à une fréquence prédéterminée est réalisée à partir d'un bruit électronique filtré à la fréquence prédéterminée.

10. Méthode de gestion selon l'une des revendications précédentes, dans laquelle la fréquence prédéterminée est 13,56 MHz.

11. Méthode de gestion selon l'une des revendications précédentes, dans laquelle, à un instant donné, un seul équipement périphérique (15) transmet des données à la base centrale (21).

12. Méthode de gestion selon la revendication 11, dans laquelle la transmission des données vers la base centrale (21) se fait de manière séquentielle entre les équipements périphériques (15) selon un protocole d'anti-collision.

13. Méthode de gestion selon l'une des revendications précédentes, dans laquelle le transfert d'une partie au moins de l'énergie récupérée vers la base centrale (21) est réalisé lorsque la quantité d'énergie récupérée atteint un seuil prédéterminé.

14. Méthode de gestion selon l'une des revendications précédentes, dans laquelle l'énergie est stockée au niveau des équipements périphériques (15).

15. Méthode de gestion selon l'une des revendications précédentes, dans laquelle l'énergie est stockée au niveau de la base centrale (21).

16. Méthode de gestion selon l'une des revendications 3 à 5 en combinaison avec la revendication 15, dans laquelle la base centrale (21) transmet à un équipement périphérique un signal de déclenchement prédéterminé pour déclencher l'acquisition des données puis transmet un signal, à l'équipement périphérique (15) de manière récupérer les données acquises par identification radio-fréquence.

17. Système de transfert de données (13) comprenant
- une pluralité d'équipements périphériques (15),
- une base centrale (21),
le système de transfert de données (13) comprenant des moyens de communication radio-fréquence (24) permettant le transfert de données entre les équipements périphériques (15) et la base centrale (21),
**caractérisé en ce que**
- la base centrale comporte une antenne accordée sur une fréquence prédéterminée et est configurée pour récupérer un signal radio-fréquence ,émis par un équipement périphérique, à la fréquence prédéterminée et réémettre un signal radio-fréquence à la fréquence prédéterminée vers les équipements périphériques,
- la pluralité d'équipements périphériques (15) comprend
- des moyens de récupération d'énergie (19) destinés à alimenter d'une part la pluralité d'équipements périphériques (15) et d'autre part la base centrale (21) via les moyens de communication radio-fréquence (24),
- une antenne double boucle (23) dans laquelle une première boucle (31) est configurée pour émettre un signal radio-fréquence (27), la deuxième boucle (35) étant configurée pour recevoir un signals radio-fréquence (27), les première (31) et deuxième (35) boucles étant configurées pour obtenir une impédance mutuelle nulle, ladite antenne double boucle (23) étant également configurée pour:
- réaliser une phase d'écoute afin de détecter un éventuel signal radio-fréquence émis par la base centrale (21) lorsque le processus de communication de l'équipement périphérique (15) à la base centrale (21) est déclenché
- transmettre, à la base centrale (21), un signal radio-fréquence synchrone et en phase avec un signal radio-fréquence détecté si un signal radio-fréquence émis par la base centrale (21) est détecté
- émettre un signal radio-fréquence à la fréquence prédéterminée sinon.

18. Système de transfert de données (13) selon la revendication 17 dans lequel les équipements périphériques (15) comprennent des moyens d'identification permettant de fournir un identifiant de l'équipement périphérique (15) correspondant, les moyens de communication permettant le transfert dudit identifiant de l'équipements périphérique correspondant (15) vers la base centrale (21).

19. Système de transfert de données (13) selon la revendication 17 ou 18 dans lesquelles équipements périphériques (15) comprennent des moyens de mesure (17) d'au moins une grandeur physique,
les moyens de communication permettant le transfert d'au moins une valeur de la, au moins une grandeur physique mesurée des équipements périphériques (15) vers la base centrale (21),
et dans lequel la base centrale (21) comprend des moyens de traitement des données transférées correspondant à la, au moins une, valeur de la, au moins une, grandeur physique mesurée.

20. Système de transfert de données (13) selon l'une des revendications 17 à 19, dans lequel les antennes double boucle (23) des équipements périphériques (15) sont configurées de manière à émettre un signal radio-fréquence (27) à une fréquence commune prédéterminée et en phase les uns avec les autres.

21. Système de transfert de données (13) selon l'une des revendications 17 à 20, dans lequel la pluralité d'équipements périphériques (15) comprend des moyens de stockage (29) de l'énergie récupérée.

22. Système de transfert de données (13) selon l'une des revendications 17 à 21, dans lequel la base centrale (21) comprend des moyens de stockage de l'énergie récupérée.

23. Système de transfert de données (13) selon l'une des revendications 17 à 22, dans laquelle le système de transfert de données (13) correspond à un pèse-personne comportant des équipements périphériques (15) disposés au niveau de la position des pieds de l'utilisateur sur le pèse-personne, les dits équipements périphériques (15) comprenant des moyens de récupération de l'énergie (19) fournie par la présence de l'utilisateur sur le pèse-personne et des moyens de mesure (17) de la force associée à la présence de l'utilisateur, la base centrale (21) comprenant des moyens de détermination du poids de l'utilisateur à partir des mesures fournies par les équipements périphériques et des moyens d'affichage du poids déterminé.

24. Système de transfert de données (13) selon la revendication 23, dans lequel les moyens de récupération de l'énergie (19) fournie par la présence de l'utilisateur sur le pèse-personne comprennent une génératrice magnétique et les moyens de mesure (17) de la force associée à la présence de l'utilisateur comprennent des jauges de contraintes.

25. Système de transfert de données (13) selon l'une des revendications 17 à 22, dans lequel le système de transfert (13) correspond à un défibrillateur comportant des équipements périphériques (15) disposés à proximité du coeur de l'utilisateur, les dits équipements périphériques (15) comprenant des moyens de récupération de l'énergie (19) fournie par les battements du coeur de l'utilisateur, des moyens de mesure (17) du rythme cardiaque et des moyens d'application d'une décharge électrique, la base centrale (21) comprenant des moyens de détermination, en fonction des mesures du rythme cardiaque fournies par les équipements périphériques, de la nécessité d'appliquer une décharge électrique.

26. Système de transfert de données (13) selon l'une des revendications 17 à 22, dans lequel le système de transfert (13) est destiné à la surveillance des constantes physiologiques d'une personne, les équipements périphériques (15) comprenant des moyens de mesure (17) de ces constantes physiologiques et des moyens de récupération de l'énergie (19) fournie par le corps de la personne, la base centrale (21) comprenant des moyens de sauvegarde et/ou d'affichage des paramètres physiologiques de la personne.

27. Système de transfert de données (13) selon la revendication 26, dans lequel les moyens de mesure (17) des constantes physiologiques d'une personne et les moyens de récupération de l'énergie (19) fournie par le corps d'une personne comprennent des thermocouples.

## Patentansprüche

1. Verwaltungsmethode eines Datenübertragungssystems (13), umfassend
- eine Vielzahl von Peripheriegeräten (15),
- eine Zentralbasis (21),
wobei das Datenübertragungssystem (13) auch Funkfrequenzkommunikationsmittel umfasst, die die Datenübertragung zwischen den Peripheriegeräten und der Zentralbasis ermöglichen,
wobei die Methode **dadurch gekennzeichnet ist, dass**
- Energie im Bereich der Peripheriegeräte (15) rückgewonnen wird, und
- mindestens ein Teil der rückgewonnenen Energie zur Zentralbasis (21) über die Funkfrequenzkommunikationsmittel (24) übertragen wird, wobei die Zentralbasis (21) eine Antenne (25), die auf einer vorbestimmten Frequenz akkordiert ist, umfasst, wobei die Peripheriegeräte (15) eine Doppelschleifenantenne (23) umfassen, die eine wechselseitige Impedanz gleich Null aufweist, wobei eine erste Schleife (31) das Senden eines Funkfrequenzsignals (27) gewährleistet und eine zweite Schleife (35) den Empfang eines Funkfrequenzsignals (27) gewährleistet, wobei die Synchronisation der von der Vielzahl von Antennen (23) entsandten Funkfrequenzsignale (27) die folgenden Schritte umfasst:
- wenn das Kommunikationsverfahren des Peripheriegeräts (15) an der Zentralbasis (21) ausgelöst wird, wird eine Abhörphase von der Schleife (35) der Antenne (23) ausgeführt, die dazu vorgesehen ist, ein Funkfrequenzsignal (27) zu empfangen, um ein mögliches Funkfrequenzsignal (27), das von der Zentralbasis (21) entsandt wird, zu erkennen,
- wenn ein von der Zentralbasis (21) entsandtes Funkfrequenzsignal (27) erkannt wird, verwendet das Peripheriegerät (15) nun das erkannte Funkfrequenzsignal (27), um an die Zentral basis (21) ein synchrones und mit dem erkannten Funkfrequenzsignal (27) in Phase befindliches Funkfrequenzsignal (27) zu übertragen,
- wenn kein von der Zentralbasis (21) entsandtes Funkfrequenzsignal (27) erkannt wird, entsendet das Peripheriegerät (15) in diesem Fall ein Funkfrequenzsignal (27) auf der vorbestimmten Frequenz,
- wenn die Zentralbasis (21) ein von dem Peripheriegerät (15) auf der vorbestimmten Frequenz entsandtes Funkfrequenzsignal (27) empfängt, gewinnt sie das empfangene Funkfrequenzsignal (27) rück und entsendet wieder ein Funkfrequenzsignal (27) auf der vorbestimmten Frequenz zu den Peripheriegeräten (15),
wobei die Synchronisierung der Funkfrequenzsignale (27) eine gleichzeitige Energieübertragung von den Peripheriegeräten (15) zur zentralen Basis (21) ermöglicht, ohne eine zerstörerische Wirkung der Funkfrequenzsignale (27) untereinander zu haben.

2. Verwaltungsmethode nach Anspruch 1, bei der die Peripheriegeräte Identifizierungsmittel umfassen, und bei der die zwischen einem Peripheriegerät (15) und der Zentralbasis (21) übertragenen Daten einen Identifikator des Peripheriegeräts (15) umfassen.

3. Verwaltungsmethode nach Anspruch 1 oder 2, bei der die Peripheriegeräte (15) Mittel zum Messen (17) mindestens einer physikalischen Größe umfassen, wobei die zwischen einem Peripheriegerät (15) und der Zentralbasis (21) übertragenen Daten mindestens einen Wert der mindestens einen gemessenen physikalischen Größe umfassen, und die Zentralbasis (21) Mittel zur Verarbeitung der übertragenen Daten entsprechend dem mindestens einen Wert der mindestens einen gemessenen physikalischen Größe umfasst.

4. Verwaltungsmethode nach einem der vorhergehenden Ansprüche, bei der die Energieübertragung von den Peripheriegeräten (15) zur Zentralbasis (21) durch eine induktive Kopplung der Funkfrequenzkommunikationsmittel (24) erfolgt.

5. Verwaltungsmethode nach einem der vorhergehenden Ansprüche, bei der die Energierückgewinnung die Umwandlung von einer im Bereich der Peripheriegeräte (15) verfügbaren Energie in elektrische Energie umfasst.

6. Verwaltungsmethode nach einem der vorhergehenden Ansprüche, bei der die Erzeugung eines mit einem erkannten Funkfrequenzsignal (27) synchronen Funkfrequenzsignals (27) durch ein Peripheriegerät (15) durch eine elektronische Formungsschaltung erfolgt.

7. Verwaltungsmethode nach einem der Ansprüche 1 bis 5, bei der die Erzeugung eines mit einem erkannten Funkfrequenzsignal (27) synchronen Funkfrequenzsignals (27) durch ein Peripheriegerät (15) durch aufeinanderfolgende Annäherungen erfolgt, wobei die Phase zur Suche der Resonanz des erkannten Signals versetzt wird.

8. Verwaltungsmethode nach einem der vorhergehenden Ansprüche, bei der das Senden eines Funkfrequenzsignals (27) auf einer vorbestimmten Frequenz durch ein Peripheriegerät (15) durch einen lokalen Oszillator (57) des Peripheriegeräts (15) erfolgt.

9. Verwaltungsmethode nach einem der Ansprüche 1 bis 7, bei der das Senden eines Funkfrequenzsignals (27) auf einer vorbestimmten Frequenz durch ein Peripheriegerät (15) aus einem auf die vorbestimmte Frequenz gefilterten elektronischen Geräusch erfolgt.

10. Verwaltungsmethode nach einem der vorhergehenden Ansprüche, bei der die vorbestimmte Frequenz 13,56 MHz beträgt.

11. Verwaltungsmethode nach einem der vorhergehenden Ansprüche, bei der zu einem gegebenen Zeitpunkt ein einziges Peripheriegerät (15) Daten an die Zentralbasis (21) überträgt.

12. Verwaltungsmethode nach Anspruch 11, bei der die Übertragung der Daten zur Zentralbasis (21) sequentiell zwischen den Peripheriegeräten (15) nach einem Antikollisionsprotokoll erfolgt.

13. Verwaltungsmethode nach einem der vorhergehenden Ansprüche, bei der die Übertragung mindestens eines Teils der rückgewonnenen Energie zur Zentralbasis (21) erfolgt, wenn die rückgewonnene Energie eine vorbestimmte Schwelle erreicht.

14. Verwaltungsmethode nach einem der vorhergehenden Ansprüche, bei der die Energie im Bereich der Peripheriegeräte (15) gespeichert wird.

15. Verwaltungsmethode nach einem der vorhergehenden Ansprüche, bei der die Energie im Bereich der Zentralbasis (21) gespeichert wird.

16. Verwaltungsmethode nach einem der Ansprüche 3 bis 5 in Kombination mit Anspruch 15, bei der die Zentralbasis (21) an ein Peripheriegerät ein vorbestimmtes Auslösesignal überträgt, um die Erfassung der Daten auszulösen, und dann ein Signal an das Peripheriegerät (15) überträgt, um die erfassten Daten durch Funkfrequenzidentifikation rückzugewinnen.

17. Datenübertragungssystem (13), umfassend
- eine Vielzahl von Peripheriegeräten (15),
- eine Zentralbasis (21),
wobei das Datenübertragungssystem (13) Funkfrequenzkommunikationsmittel (24) umfasst, die die Übertragung von Daten zwischen den Peripheriegeräten (15) und der Zentralbasis (21) ermöglichen,
**dadurch gekennzeichnet, dass**
- die Zentralbasis eine Antenne umfasst, die auf eine vorbestimmte Frequenz akkordiert und dazu vorgesehen ist, ein Funkfrequenzsignal, das von einem Peripheriegerät auf der vorbestimmten Frequenz entsandt wurde, rückzugewinnen und wieder ein Funkfrequenzsignal auf der vorbestimmten Frequenz zu den Peripheriegeräten zu entsenden,
- die Vielzahl von Peripheriegeräten (15) umfasst:
- Energierückgewinnungsmittel (19), die dazu bestimmt sind, einerseits die Vielzahl von Peripheriegeräten (15) und andererseits die Zentralbasis (21) über die Funkfrequenzkommunikationsmittel (24) zu versorgen,
- eine Doppelschleifenantenne (23), bei der die erste Schleife (31) dazu vorgesehen ist, ein Funkfrequenzsignal (27) zu entsenden, wobei die zweite Schleife (35) dazu vorgesehen ist, ein Funkfrequenzsignal (27) zu empfangen, wobei die erste (31) und die zweite (35) Schleife dazu vorgesehen sind, eine wechselseitige Impedanz gleich Null zu erhalten, wobei die Doppelschleifenantenne (23) auch dazu vorgesehen ist:
- eine Abhörphase durchzuführen, um ein mögliches Funkfrequenzsignal zu erkennen, das von der Zentralbasis (21) entsandt wird, wenn das Kommunikationsverfahren von dem Peripheriegerät (15) zur Zentralbasis (21) ausgelöst wird,
- an die Zentralbasis (21) ein synchrones und mit einem erfassten Funkfrequenzsignal in Phase befindliches Funkfrequenzsignal zu übertragen, wenn ein von der Zentralbasis (21) entsandtes Funkfrequenzsignal erkannt wird,
- andernfalls ein Funkfrequenzsignal auf der vorbestimmten Frequenz zu entsenden.

18. Datenübertragungssystem (13) nach Anspruch 17, bei dem die Peripheriegeräte (15) Identifizierungsmittel umfassen, die es ermöglichen, einen Identifikator des entsprechenden Peripheriegeräts (15) zu liefern, wobei die Kommunikationsmittel die Übertragung des Identifikators von dem entsprechenden Peripheriegerät (15) zur Zentralbasis (21) ermöglichen.

19. Datenübertragungssystem (13) nach Anspruch 17 oder 18, bei dem die Peripheriegeräte (15) Mittel zum Messen (17) mindestens einer physikalischen Größe umfassen,
wobei die Kommunikationsmittel die Übertragung mindestens eines Werts der mindestens einen gemessenen physikalischen Größe von den Peripheriegeräten (15) zu der Zentralbasis (21) ermöglichen,
und bei dem die Zentralbasis (21) Mittel zur Verarbeitung der übertragenen Daten entsprechend dem mindestens einen Wert und der mindestens einen gemessenen physikalischen Größe umfasst.

20. Datenübertragungssystem (13) nach einem der Ansprüche 17 bis 19, bei dem die Doppelschleifenantennen (23) der Peripheriegeräte (15) derart ausgeführt sind, dass sie ein Funkfrequenzsignal (27) auf einer vorbestimmten gemeinsamen Frequenz und in Phase miteinander entsenden.

21. Datenübertragungssystem (13) nach einem der Ansprüche 17 bis 20, bei dem die Vielzahl von Peripheriegeräten (15) Speichermittel (29) für die rückgewonnene Energie umfasst.

22. Datenübertragungssystem (13) nach einem der Ansprüche 17 bis 21, bei dem die Zentralbasis (21) Speichermittel für die rückgewonnene Energie umfasst.

23. Datenübertragungssystem (13) nach einem der Ansprüche 17 bis 22, bei dem das Datenübertragungssystem (13) einer Personenwaage entspricht, umfassend Peripheriegeräte (15), die im Bereich der Füße des Benutzers auf der Personenwaage angeordnet sind, wobei die Peripheriegeräte (15) Mittel zur Rückgewinnung der Energie (19), die durch die Anwesenheit des Benutzers auf der Personenwaage geliefert wird, und Mittel zum Messen (17) der mit der Anwesenheit des Benutzers verbundenen Kraft umfassen, wobei die Zentralbasis (21) Mittel zur Bestimmung des Gewichts des Benutzers aus den von den Peripheriegeräten gelieferten Messungen und Mittel zur Anzeige des bestimmten Gewichts umfassen.

24. Datenübertragungssystem (13) nach Anspruch 23, bei dem die Mittel zur Rückgewinnung (19) der durch die Anwesenheit des Benutzers auf der Personenwaage gelieferten Energie eine magnetische Erzeugende umfassen, und die Mittel zum Messen (17) der Kraft in Verbindung mit der Anwesenheit des Benutzers Spannungsmesseinheiten umfassen.

25. Datenübertragungssystem (13) nach einem der Ansprüche 17 bis 22, bei dem das Übertragungssystem (13) einem Defibrillator entspricht, umfassend Peripheriegeräte (15), die in der Nähe des Herzens des Benutzers angeordnet sind, wobei die Peripheriegeräte (15) Mittel zur Rückgewinnung (19) der Energie, die durch das Schlagen des Herzens des Benutzers geliefert wird, Mittel zum Messen (17) des Herzrhythmus und Mittel zum Anlegen eines Elektroschocks umfasst, wobei die Zentralbasis (21) Mittel zur Bestimmung der Notwendigkeit des Anlegens eines Elektroschocks in Abhängigkeit von den Messungen des Herzrhythmus, die von den Peripheriegeräten geliefert werden, umfasst.

26. Datenübertragungssystem (13) nach einem der Ansprüche 17 bis 22, bei dem das Übertragungssystem (13) zur Überwachung der physiologischen Konstanten einer Person bestimmt ist, wobei die Peripheriegeräte (15) Mittel zum Messen (17) dieser physiologischen Konstanten und Mittel zur Rückgewinnung (19) der Energie umfasst, die durch den Körper der Person geliefert wird, wobei die Zentralbasis (21) Mittel zur Speicherung und/oder Anzeige der physiologischen Parameter der Person umfasst.

27. Datenübertragungssystem (13) nach Anspruch 26, bei dem die Mittel zum Messen (17) der physiologischen Konstanten einer Person und die Mittel zur Rückgewinnung (19) der vom Körper einer Person gelieferten Energie Thermoelemente umfassen.

## Claims

1. Method for managing a data transfer system (13) comprising
- a plurality of peripheral devices (15),
- a central base (21),
the data transfer system (13) also comprising radiofrequency communication means enabling data to be transferred between the peripheral devices and the central base, the method being **characterized in that**
- energy is recovered on the peripheral devices (15), and
- at least a portion of the recovered energy is transferred to the central base (21) via the radiofrequency communication means (24), the central base (21) comprising an antenna (25) tuned to a predetermined frequency, the peripheral devices (15) comprising a double-loop antenna (23) having a zero mutual impedance, a first loop (31) handling the transmission of a radiofrequency signal (27) and a second loop (35) handling the reception of a radiofrequency signal (27), the synchronization of the radiofrequency signals (27) transmitted by the plurality of antennas (23) comprising the following steps:
- when the process of communication from the peripheral device (15) to the central base (21) is triggered, a listening phase is implemented by the loop (35) of the antenna (23) configured to receive a radiofrequency signal (27) in order to detect any radiofrequency signal (27) transmitted by the central base (21),
- if a radiofrequency signal (27) transmitted by the central base (21) is detected, the peripheral device (15) then uses the detected radiofrequency signal (27) to transmit, to the central base (21), a radiofrequency signal (27) that is synchronous and in phase with the detected radiofrequency signal (27),
- if no radiofrequency signal (27) transmitted by the central base (21) is detected, the peripheral device (15) then transmits a radiofrequency signal (27) at the predetermined frequency,
- when the central base (21) receives a radiofrequency signal (27) transmitted by a peripheral device (15) at the predetermined frequency, it recovers the received radiofrequency signal (27) and retransmits a radiofrequency signal (27) at the predetermined frequency to the peripheral devices (15),
the synchronization of the radiofrequency signals (27) enabling a simultaneous energy transfer from the peripheral devices (15) to the central base (21) without having any mutually destructive effect between the radiofrequency signals (27).

2. Management method according to Claim 1, in which the peripheral devices comprise identification means and in which the data transferred between a peripheral device (15) and the central base (21) comprise an identifier of said peripheral device (15).

3. Management method according to Claim 1 or 2, in which the peripheral devices (15) comprise means (17) for measuring at least one physical quantity, the data transferred between a peripheral device (15) and the central base (21) comprise at least one value of the at least one measured physical quantity and the central base (21) comprises means for processing the transferred data corresponding to the at least one value of the at least one measured physical quantity.

4. Management method according to one of the preceding claims, in which the transfer of energy from the peripheral devices (15) to the central base (21) is performed by inductive coupling of the radiofrequency communication means (24).

5. Management method according to one of the preceding claims, in which the energy recovery comprises the conversion of energy available on the peripheral devices (15) into electrical energy.

6. Management method according to one of the preceding claims, in which the generation by a peripheral device (15) of a radiofrequency signal (27) synchronous with a detected radiofrequency signal (27) is performed by a shaping electronic circuit.

7. Management method according to one of Claims 1 to 5, in which the generation by a peripheral device (15) of a radiofrequency signal (27) synchronous with a detected radiofrequency signal (27) is performed by successive approximations by shifting the phase to find the resonance of the detected signal.

8. Management method according to one of the preceding claims, in which the transmission by a peripheral device (15) of a radiofrequency signal (27) at a predetermined frequency is performed by a local oscillator (57) of the peripheral device (15).

9. Management method according to one of Claims 1 to 7, in which the transmission by a peripheral device (15) of a radiofrequency signal (27) at a predetermined frequency is performed on the basis of a filtered electronic noise at the predetermined frequency.

10. Management method according to one of the preceding claims, in which the predetermined frequency is 13.56 MHz.

11. Management method according to one of the preceding claims, in which, at a given instant, a single peripheral device (15) transmits data to the central base (21).

12. Management method according to Claim 11, in which the transmission of the data to the the central base (21) is done sequentially between the peripheral devices (15) according to an anti-collision protocol.

13. Management method according to one of the preceding claims, in which the transfer of at least a portion of the recovered energy to the central base (21) is performed when the quantity of energy recovered reaches a predetermined threshold.

14. Management method according to one of the preceding claims, in which the energy is stored on the peripheral devices (15).

15. Management method according to one of the preceding claims, in which the energy is stored on the central base (21).

16. Management method according to one of Claims 3 to 5 in combination with Claim 15, in which the central base (21) transmits a predetermined triggering signal to a peripheral device in order to trigger the acquisition of the data then transmits a signal to the peripheral device (15) so as to recover the data acquired by radiofrequency identification.

17. Data transfer system (13) comprising
- a plurality of peripheral devices (15),
- a central base (21),
the data transfer system (13) comprising radiofrequency communication means (24) enabling the transfer of data between the peripheral devices (15) and the central base (21),
**characterized in that**
- the central base comprises an antenna tuned to a predetermined frequency and is configured to recover a radiofrequency signal, transmitted by a peripheral device, at the predetermined frequency and retransmit a radiofrequency signal at the predetermined frequency to the peripheral devices,
- the plurality of peripheral devices (15) comprises
- energy recovery means (19) intended to supply, on the one hand, the plurality of peripheral devices (15) and, on the other hand, the central base (21) via the radiofrequency communication means (24),
- a double-loop antenna (23) in which a first loop (31) is configured to transmit a radiofrequency signal (27), the second loop (35) being configured to receive a radiofrequency signal (27), the first (31) and second (35) loops being configured to obtain a zero mutual impedance, said double-loop antenna (23) being also configured to:
- implement a listening phase in order to detect any radiofrequency signal transmitted by the central base (21) when the process of communication from the peripheral device (15) to the central base (21) is triggered
- transmit, to the central base (21), a radiofrequency signal that is synchronous and in phase with a detected radiofrequency signal if a radiofrequency signal transmitted by the central base (21) is detected
- otherwise, transmit a radiofrequency signal at the predetermined frequency.

18. Data transfer system (13) according to Claim 17, in which the peripheral devices (15) comprise identification means enabling an identifier of the corresponding peripheral device (15) to be supplied, the communication means enabling said identifier to be transferred from the corresponding peripheral device (15) to the central base (21).

19. Data transfer system (13) according to Claim 17 or 18, in which the peripheral devices (15) comprise means (17) for measuring at least one physical quantity,
the communication means allowing for the transfer of at least one value of the at least one measured physical quantity from the peripheral devices (15) to the central base (21),
and in which the central base (21) comprises means for processing the transferred data corresponding to the at least one value of the at least one measured physical quantity.

20. Data transfer system (13) according to one of Claims 17 to 19, in which the double-loop antennas (23) of the peripheral devices (15) are configured so as to transmit a radiofrequency signal (27) at a predetermined common frequency and in phase with one another.

21. Data transfer system (13) according to one of Claims 17 to 20, in which the plurality of peripheral devices (15) comprises means (29) for storing the recovered energy.

22. Data transfer system (13) according to one of Claims 17 to 21, in which the central base (21) comprises means for storing the recovered energy.

23. Data transfer system (13) according to one of Claims 17 to 22, in which the data transfer system (13) corresponds to scales comprising peripheral devices (15) arranged at the level of the position of the feet of the user on the scales, said peripheral devices (15) comprising means (19) for recovering the energy supplied by the presence of the user on the scales and means (17) for measuring the force associated with the presence of the user, the central base (21) comprising means for determining the weight of the user from the measurements supplied by the peripheral devices and means for displaying the determined weight.

24. Data transfer system (13) according to Claim 23, in which the means (19) for recovering the energy supplied by the presence of the user on the scales comprise a magnetic generator and the means (17) for measuring the force associated with the presence of the user comprise strain gauges.

25. Data transfer system (13) according to one of Claims 17 to 22, in which the transfer system (13) corresponds to a defibrillator comprising peripheral devices (15) arranged in proximity to the heart of the user, said peripheral devices (15) comprising means (19) for recovering the energy supplied by the beats of the heart of the user, means (17) for measuring the heart rate and means for applying an electrical discharge, the central base (21) comprising means for determining, on the basis of the measurements of the heart rate supplied by the peripheral devices, the need to apply an electrical discharge.

26. Data transfer system (13) according to one of Claims 17 to 22, in which the transfer system (13) is intended to monitor physiological constants of a person, the peripheral devices (15) comprising means (17) for measuring these physiological constants and means (19) for recovering the energy supplied by the body of the person, the central base (21) comprising means for saving and/or displaying the physiological parameters of the person.

27. Data transfer system (13) according to Claim 26, in which the means (17) for measuring the physiological constants of a person and the means (19) for recovering the energy supplied by the body of a person comprise thermocouples.
